# EUROPÄISCHE PATENTSCHRIFT

(11) **EP 1 109 134 B1**
(45) Veröffentlichungstag und Bekanntmachung des Hinweises auf die Patenterteilung: **25.05.2005**
(21) Anmeldenummer: 00127211.1
(22) Anmeldetag: 14.12.2000
(51) Int. Cl.: G06T 9/00, G08G 1/017, G08G 1/054

(54) **Ortsinformation bei Dateikompression**
Information location by data compression
Information d'emplacement par compression de données

(30) Priorität: 17.12.1999 DE 19960887
(43) Veröffentlichungstag der Anmeldung: 20.06.2001
(73) Patentinhaber: ROBOT Visual Systems GmbH, 40789 Monheim (DE)
(72) Erfinder: Stadler, Torsten, 38226 Salzgitter (DE); Kuester, Hans-Holger, 31061 Alfeld (DE)
(74) Vertreter: Weisse, Jürgen, Dipl.-Phys.

(56) Entgegenhaltungen:
- WO-A-94/28527
- DE-A- 19 810 302
- US-A- 5 933 249
- US-A- 5 966 468
- BENEDETTI A ET AL: "Towards a dedicated compression pipeline for document image archiving" DOCUMENT IMAGE ANALYSIS, 1997. (DIA '97). PROCEEDINGS., WORKSHOP ON SAN JUAN, PUERTO RICO 20 JUNE 1997, LOS ALAMITOS, CA, USA,IEEE COMPUT. SOC, US, 1997, Seiten 40-43, XP010250261 ISBN: 0-8186-8055-5
- STEPHENSON T ET AL: "IMACTS: an interactive, multiterabyte image archive" , MASS STORAGE SYSTEMS, 1995. 'STORAGE - AT THE FOREFRONT OF INFORMATION INFRASTRUCTURES', PROCEEDINGS OF THE FOURTEENTH IEEE SYMPOSIUM ON MONTEREY, CA, USA 11-14 SEPT. 1995, LOS ALAMITOS, CA, USA,IEEE COMPUT. SOC, US, PAGE(S) 146-161 XP010194189 ISBN: 0-8186-7064-9 * Seite 156, linke Spalte, Zeile 12 - Zeile 23 *

## Beschreibung

### Technisches Gebiet

Die Erfindung betrifft Verkehrsüberwachungseinrichtung mit einer Vorrichtung zur Datenspeicherung mit Coder und/oder -Decoder zum Speichern von Bilddaten in einem komprimierten von Bilddaten und zum Auslesen solcher gespeicherten Bilddaten mit Speichermitteln zum Speichern *von Bilddaten, einem Kompressions-Coder zum Umsetzen der Bilddaten in ein komprimiertes Datenformat und zum Speichern der so komprimierten Bilddaten in den Speichermitteln und mit einem Decoder zum Dekomprimieren von gespeicherten, komprimierten Bilddaten.*

Weiterhin betrifft die Erfindung ein Verfahren zur Verkehrsüberwachung bei welchen Bilddaten eines mittels einer digitalen Kamera erhaltenen Fahrzeugbildes in einem komprimierten bzw. dekomprimierten Datenformat gespeichent bzw ausgelesen werden *mit den Verfahrensschritten*:
*(a) Speichern der Bilddaten in Speichermitteln,*
*(b) Auslesen und Komprimieren der so gespeicherten Bilddaten und Wiederspeichern der komprimierten Bilddaten in den Speichermitteln,*
*(c) Auslesen und Dekomprimieren komprimierter Bilddaten*

### Stand der Technik

Verkehrsüberwachungsanlagen werden dazu eingesetzt, um Verkehrsübertretungen, wie beispielsweise Geschwindigkeitüberschreitungen oder Überfahren von Kreuzungen bei Rotlicht, zu überwachen. Solche Verkehrsüberwachungsanlagen nehmen von jedem Verkehrssünder bzw. dessen Fahrzeug ein Bild von seinem Fehlverhalten auf. Durch die Vielzahl der Verkehrssünder müssen entsprechend viele Bilder verarbeitet werden. Dies wird bei herkömmlichen Anlagen mit Filmnegativen bewältigt und stellt die Betreiber häufig vor große Mengen an Filmmaterial, die nicht einfach zu verarbeiten und auszuwerten sind.

Um das Bildmaterial besser verarbeiten zu können, wird immer öfter auf digitale Kameras bei solchen Verkehrsüberwachungsanlagen gesetzt. Dies hat den Vorteil, daß die digitalen Daten direkt verarbeitet werden können. Da kein Filmnegativ bei Digitalkameras notwendig ist, wird nicht nur bei der Filmentwicklung gespart, sondern auch bei der Auswertung und Verarbeitung des Datenmaterials bis hin zum Versenden des Bußgeldbescheids durch Automation. Aber auch bei diesen Verkehrsüberwachungsanlagen sind kapazitive Grenzen bzgl. der Bildmengen gesteckt.

Durch die DE 198 10 302 A1 ist eine solche Verkehrsüberwachungsanlage in Form eines Geschwindigkeitsmessgerätes bekannt. Dabei wird die Geschwindigkeit eines Kraftfahrzeuges mit einem Radarmessgerät gemessen und ein Bild von dem Kraftfahrzeug mit einer Kamera aufgenommen. Anschließend werden die Geschwindigkeitsmesswerte und die Bilddaten digitalisiert und gemeinsam in einem Datensprecher abgespeichert. Eine Kompression oder Dekompression der Daten erfolgt nicht.

Es ist weiterhin das Einspiegeln von Informationen auf Filmnegative bekannt. Bei digitalen Bilder werden entsprechende digitale Informationsblöcke an das digitale Bild angehängt, die beispielsweise Informationen über Zeit, Datum enthalten.

Aus der digitalen Bildverarbeitung sind weiterhin verschiedene Methoden der Bildkompression bekannt. Es sind Kompressionsformate bekannt, bei denen das Bild komprimiert wird und bei der Dekompression der ursprüngliche Zustand wieder hergestellt wird.

Zur Kompression von digitalen Bildern werden verschiedene Verfahren verwendet. Hier sei z.B. das JPEG-, GIF- und das TIF-Format genannt, welche auch im "Internet" nicht selten zur Versendung von Bilddaten verwandt werden. Diese Kompressionsverfahren sind weitestgehend standardisiert und in entsprechender Literatur beschrieben, weswegen hier nicht auf nähere Details eingegangen wird. Solche Kompressionenverfahren werden daher auch erfolgreich bei Verkehrsüberwachungsanlagen mit Digitalkameras eingesetzt, um die Datenmengen zu reduzieren.

Bei solchen Kompressionsverfahren wird immer das gesamte digitale Bild komprimiert und entsprechend das gesamte Bild dekomprimiert. Dies hat den Nachteil, daß, wenn nur ein bestimmter Bereich bzw. Informationsblock benötigt wird, jedesmal das gesamte Bild dekomprimiert werden muß. Dies hat zur Konsequenz das der Vorgang ungenügsam *unerwünscht* langsam abläuft.

In der Veröffentlichung "Towards a Dedicated Compression Pipeline for Document Image Archiving" von Arrigo Benedetti et al. in IEEE Comput. Soc, US, 1997, Seiten 40-43, ist ein Verfahren zur Speicherung von Bild- und Textdaten eines Dokuments in einem komprimierten bzw. dekomprimierten Datenformat in einem Datenspeicherbeschrieben. Vor der Kompression der Bild- und Textdaten wird das Dokument durch Abtasten mit einer 8x8-Pixelmatrix analysiert und segmentiert. "Segmentieren" bedeutet dabei die Erkennung zusammenhängender Bild- oder Textbereiche. Dabei werden Textbereiche von Bildbereichen unterschieden. Die Textbereiche und Bildbereiche werden dann mit unterschiedlichen, für Text bzw. Bilder geeigneten Kompressionsverfahren komprimiert.

Bei solchen Kompressionsverfahren wird immer das gesamte digitale Bild komprimiert und entsprechend das gesamte Bild dekomprimiert. Dies hat den Nachteil, daß, wenn nur ein bestimmter Bereich bzw. Informationsblock benötigt wird, jedesmal das gesamte Bild, sei es ein echter Bildbereich, sei es ein Textbereich, dekomprimiert werden muß. Dies hat die vorerwähnte Folge, daß der Vorgang unerwünscht langsam abläuft.

*In der Veröffentlichung "IMACTS: An Interactiv, Multiterabyte Image Archive" von Thomas Stephenson et al. in IEEE Comput. Soc, US, 1995, Seiten 146-161 ist ein Verfahren zur Speicherung von Bilddaten beschrieben. Dabei wird ein effizienter Zugriff auf die Bilddaten dadurch gewährleistet, dass nur diejenige Bildsegmente übertragen werden, die in der Anwendung auch tatsächlich von Interesse sind.*

### Offenbarung der Erfindung

Aufgabe der Erfindung ist es daher Verkehrsüberwachungseinrichtung und Verkehrsüberwachungsverfahren zur Bildkompression zu schaffen, bei der trotz optimaler Kompression der Bilddaten die wesentlichen Bildinformationen schnell aufgefunden und dekomprimiert werden können.

Erfindungsgemäß wird diese Aufgabe dadurch gelöst, daß bei einer Vorrichtung der eingangs genannten Art
*(a) der Kompressions-Coder (14) Mittel aufweist, zum Unterteilen der aus den Speichermitteln ausgelesenen Bilddaten (10) in Datensegmente und zum Versehen dieser Datensegmente mit Labeln die ein Auffinden des Datensegments in der komprimiernten Bilddatei gestattet und welche mit den Datensegmenten abspeicherbar sind und eine Ortsinformation der Datensegmente darstellen, und*
*(b) der Decoder Mittel zur Auswahl von Datensegmenten der Bilddaten, die bestimmten Bildbereichen (30,32) des gesamten Bildes entsprechen, und zur Dekompression nur dieser Bildbereiche (30,32) und zum Ablegen dieser dekomprimierten Bildbereiche in den Speichermitteln (12) enthält.*

*Ein Verfahren zur Lösung der vorliegenden Aufgabe ist gekennzeichnet durch die weiteren Verfahrensschritte*
*(d) Unterteilen der* Bilddaten in Datensegmente, *die jeweils einem Bildbereich zugeordnet sind*
(e) Zuordnen von je einem Label zu jedem Datensegment, wobei die Label die Ortsinformation(28) der verschiedenen Datensegmente (36) angeben und zur Lokalisierung der Datensegmente abgespeichert werden, und
(f) Dekomprimieren nur einzelner vorgegebener Datensegmente zur Auswertung der diesen zugeordneten Bildbereiche.

Die Erfindung folgt dem Prinzip nur die Bildsegmente einer komprimierten Bilddatei zu dekomprimieren, die auch benötigt werden. Voraussetzung dafür ist, daß bereits beim Komprimieren Datensegmente festgelegt werden und einen Label erhalten, um sie beim Dekomprimieren in der komprimierten Bilddatei aufzufinden. Die Ortsinformation kann dann beispielsweise an die komprimierte Bilddatei angehängt werden oder in einer separaten Datei abgespeichert werden.

Da oft nur bestimmte Bildsegmente für die Bildauswertung benötigt werden, muß nun nicht mehr notwendigerweise die gesamte Bilddatei dekomprimiert werden, sondern es besteht die Möglichkeit, einzelne Bildbestandteile zu dekomprimieren, was einen erheblichen Geschwindigkeitsvorteil mit sich bringt.

Dabei kann eine Bilderzeugungseinrichtung zur Erzeugung digitaler Bilddaten vorgesehen sein. Die Bilderzeugungseinrichtung kann beispielsweise als eine digitale Kamera ausgebildet sein. Aber auch ein Bildabtaster, auch Scanner genannt, kann eine Bildvorlage digitalisieren und entsprechende Bilddaten erzeugen.

Durch die Kompression gehen häufig Bildinformationen verloren. Bei einigen Bildbestandteilen kann es aber erforderlich sein, daß sämtliche Informationen vorhanden sind. Trotzdem soll die Bilddatei aber möglichst wenig Speicherplatz verbrauchen. Vorzugsweise werden daher bei einem erfindungsgemäßen Verfahren *verschiedene so gebildete* Datensegmente *mit unterschiedlichen Kompressionsgraden* komprimiert. Dabei können *einzelne, durch bestimmte Label gekennzeichnete Datensegmente, die Bildbereichen entsprechen, in denen sämtliche Bildinformationen erhalten werden sollen, wesentlich weniger als die übrigen Datensegmente oder gar nicht komprimiert werden*.

Weitere Vorteile ergeben sich aus dem Gegenstand der Unteransprüche.

### Kurze Beschreibung der Zeichnung

- Fig. 1: zeigt eine Prinzipskizze einer Bilddaten-Kompression bzw. -Dekompression nach dem Stand der Technik.
- Fig. 2: zeigt eine Prinzipskizze einer erfindungsgemäßen Bilddaten-Kompression bzw. Dekompression mit Datensegmentierung.
- Fig. 3: zeigt eine Prinzipskizze eines segmentierten digitalen Bildes mit unterschiedlichen Kompressionsgraden.
- Fig. 4: zeigt eine Prinzipskizze eines segmentierten digitalen Bildes mit gleichbleibendem Kompressionsgrad.

### Bevorzugtes Ausführungsbeispiel

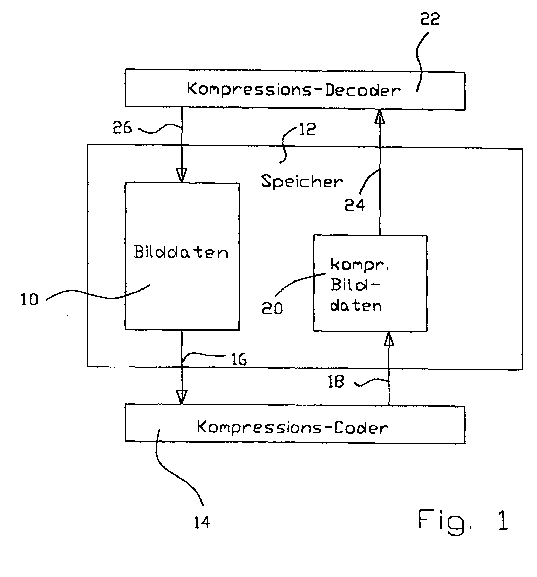

Fig. 1 zeigt eine Prinzipskizze einer Bilddaten-Kompression bzw. Dekompression nach dem Stand der Technik, wie sie beispielsweise bei Verkehrsüberwachungsanlagen zum Einsatz kommt. Bilddaten 10 werden beispielsweise von einer nicht dargestellten Digitalkamera in einem Speicher 12 als digitale Rohdaten abgelegt. Ein Kompressions-Coder 14 greift auf den Speicher 12 zu und liest die Bilddaten 10 aus. Das Auslesen wird mit Pfeil 16 angedeutet. Anschließend werden die ausgelesenen Bilddaten 10 durch den Kompressions-Coder 14 komprimiert und die komprimierten Bilddaten 20 wieder in den Speicher 12 zurückgeschrieben. Das Schreiben in den Speicher wird mit Pfeil 18 dargestellt. Für die Kompression kann ein Speicher 12, wie in dieser Darstellung von Fig. 1, aber auch mehrere getrennte Speicherbereiche verwendet werden.

Zur Darstellung des Bildes mittels entsprechender Darstellungsperipherie, die auf den Speicher zugreift, müssen nunmehr die komprimierten Bilddaten 20 dekomprimiert werden. Hierzu werden die komprimierten Bilddaten 20 von einem Kompressions-Decoder 22 ausgelesen. Der Auslesevorgang wird mit Pfeil 24 angedeutet. Nach der Dekompression der komprimierten Bilddaten 20 durch den Kompressions-Decoder 22 werden die Bilddaten wieder in den Speicher 12 abgelegt. Das Schreiben der dekomprimierten Bilddaten 10 in den Speicher 12 wird mit Pfeil 26 dargestellt. Kompressions-Coder 14 bzw. -Decoder 22 können als eine Einheit, beispielsweise in Form eines programmgesteuerten Prozessors, ausgebildet sein.

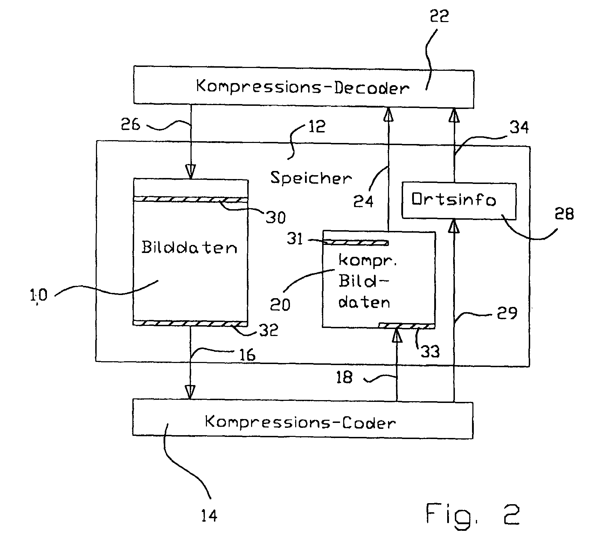

Fig. 2 zeigt eine Prinzipskizze einer erfindungsgemäßen Bilddaten-Kompression bzw. Dekompression, wie sie beispielsweise in einer Verkehrsüberwachungseinrichtung zum Einsatz kommt. Die Bilddaten 10 werden, wie beim Stand der Technik, beispielsweise von einer nicht dargestellten Digitalkamera in dem Speicher 12 als digitale Rohdaten abgelegt. Der Kompressions-Coder 14 greift auf den Speicher 12 zu und liest für den Kompressionsvorgang die Bilddaten 10 aus. Das Auslesen wird mit Pfeil 16 angedeutet. Anschließend werden die ausgelesenen Bilddaten 10 durch den Kompressions-Coder 14 in Datensegmente unterteilt und mit Labeln versehen. Diese Datensegmente werden komprimiert und wieder in den Speicher 12 zurückgeschrieben. Das Schreiben in den Speicher wird mit Pfeil 18 dargestellt. Der Block 20 symbolisiert die komprimierten Datensegmente der Bilddaten 10 im Speicher 12. Beispielsweise entsprechen Datensegmente 30, 32 des ursprünglichen Bildes 10 den komprimierten Datensegmenten 31 und 33. Zusätzlich wird jedoch noch Ortsinformation 28 aller Datensegmente in den Speicher 12 abgelegt. Die Ortsinformation 28 besteht in diesem Ausführungsbeispiel aus den Labeln, d.h. aus der Information, an welcher Stelle das zugehörige Datensegment im Speicher vorliegt. Das Ablegen der Ortsinformation 28 in den Speicher 12 durch den Kompressions-Coder 14 wird mit Pfeil 29 symbolisiert.

Für den Kompressionsvorgang kann ein einziger Speicher 12, wie in dieser Darstellung von Fig. 2, aber auch mehrere getrennte Speicherbereiche verwendet werden.

Zur Darstellung des Bildes mittels entsprechender Darstellungsperipherie müssen nunmehr die komprimierten Bilddaten 20 dekomprimiert werden. Hierzu werden die komprimierten Bilddaten 20 von einem Kompressions-Decoder 22 ausgelesen. Der Auslesevorgang wird mit Pfeil 24 angedeutet. Nach der Dekompression der komprimierten Bilddaten 20 durch den Kompressions-Decoder 22 werden die Bilddaten wieder in den Speicher 12 abgelegt. Das Schreiben der dekomprimierten Bilddaten 10 in den Speicher 12 wird mit Pfeil 26 dargestellt. Kompressions-Coder 14 bzw. -Decoder 22 können als eine Einheit, beispielsweise in Form eines programmgesteuerten Prozessors, ausgebildet sein.

Häufig ist es aber ausreichend, daß bestimmte Bildbereiche 30 bzw. 32 des gesamten Bildes 10 dargestellt werden. Der Kompressions-Decoder 22 liest dann die Ortsinformation 28 der entsprechenden Datensegmente 31, 33 aus und dekomprimiert nur diese Bildbereiche 30, 32. Das Auslesen der entsprechenden Ortsinformation 28 wird mit Pfeil 34 dargestellt. Die dekomprimierten Datensegmente werden dann durch den Kompressions-Decoder 22 in dem Speicher 12 abgelegt. Es ist also nicht mehr erforderlich, wenn nur bestimmte Informationen 30, 32 des Bildes benötigt werden, das gesamte Bild 20 zu dekomprimieren.

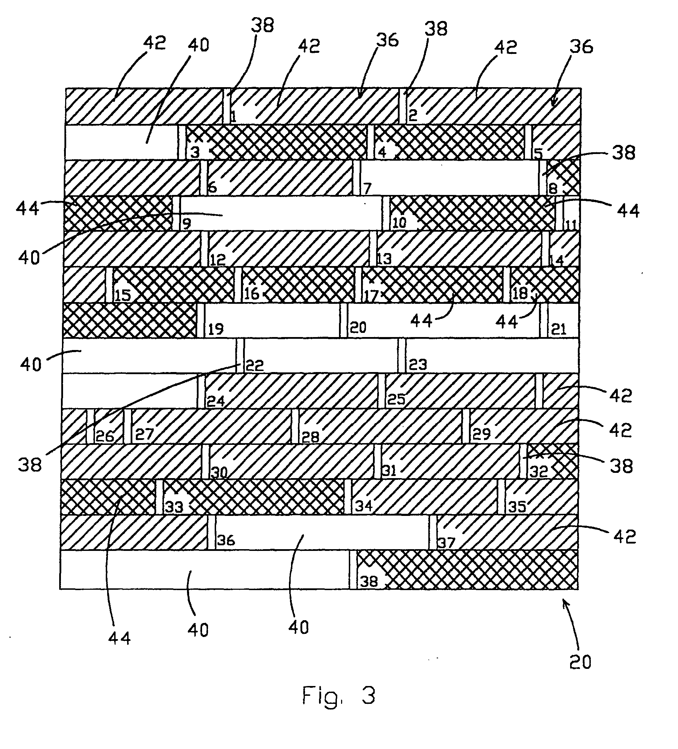

Fig. 3 zeigt eine Prinzipskizze eines segmentierten digitalen Bildes 20, wie es im Speicher 12 nach der Kompression vorliegt, mit unterschiedlichen Kompressionsgraden. Die Datensegmente 36 werden in dieser Darstellung durch Doppelstriche 38 voneinander getrennt, die auch gleichzeitig die Label der Datensegmente 36 symbolisieren. Die Label 38 sind durchnumeriert. Die Datensegmente 36 sind unterschiedlich stark komprimiert. Die Datensegmente 40 ohne Schraffierung sind gar nicht, die einfach schraffierten sind leicht und die kreuzschraffierten stark komprimiert.

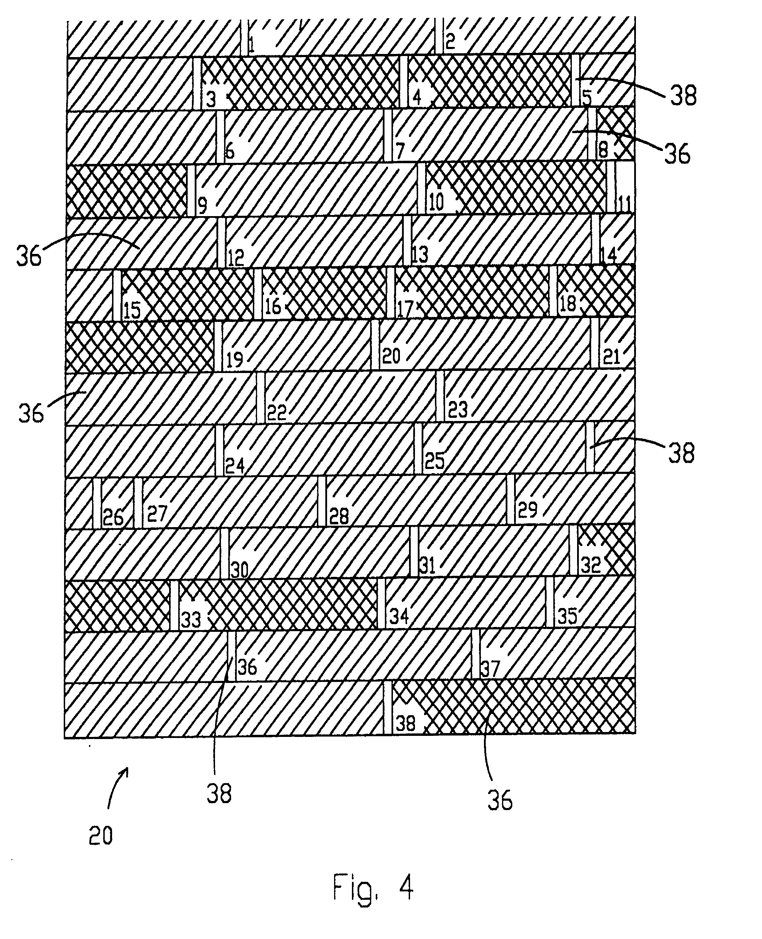

Fig. 4 zeigt eine Prinzipskizze eines segmentierten digitalen Bildes 20, wie es im Speicher 12 nach der Kompression vorliegt, jedoch im Gegensatz zu Fig. 3 mit gleichmäßigem Kompressionsgrad. Die Datensegmente 36 werden in dieser Darstellung durch Doppelstriche 38 voneinander getrennt, die auch gleichzeitig die Label der Datensegmente 36 symbolisieren. Die Label 38 sind durchnumeriert. Die Datensegmente 36 sind gleichmäßig stark komprimiert, was durch die einfache Schraffierung angedeutet wird.

## Patentansprüche

1. Verkehrsüberwachungseinrichtung mit einer Vorrichtung zur Datenspeicherung *von Bilddaten und zum Auslesen solcher gespeicherten Bilddaten* mit Speichermitteln (12) zum Speichern von Bilddaten (10), einem Kompressions-Coder (14) zum *Umsetzen* der Bilddaten (10) *in ein komprimiertes Datenformat und zum Speichern der so komprimierten Bilddaten in den Speichermitteln und mit einem Decoder* (22) *zum Dekomprimieren von gespeicherten, komprimierten Bilddaten,*
**dadurch gekennzeichnet, daß**
(a) der Kompressions-Coder (14) Mittel aufweist, *zum Unterteilen der aus den Speichermitteln ausgelesenen Bilddaten (10) in Datensegmente und zum Versehen dieser Datensegmente mit Labeln die ein Auffinden des Datensegments in der komprimiernten Bilddatei gestattet und welche mit den Datensegmenten abspeicherbar sind und eine Ortsinformation der Datensegmente darstellen,*
*(b) der Decoder Mittel zur Auswahl von Datensegmenten der Bilddaten, die bestimmten Bildbereichen (30,32) des gesamten Bildes entsprechen, und zur Dekompression nur dieser Bildbereiche (30,32) und zum Ablegen dieser dekomprimierten Bildbereiche in den Speichermitteln (12) enthält.*

2. *Vorrichtung nach Anspruch 1,* ***dadurch gekennzeichnet, daß*** *verschiedene so gebildete Datensegmente durch den Kompressions-Coder mit unterschiedlichen Kompressionsgraden komprimierbar sind.*

3. *Vorrichtung nach Anspruch 2,* ***dadurch gekennzeichnet, daß*** *der Kompressions-Coder so ausgebildet ist, daß er einzelne, durch bestimmte Label gekennzeichnete Datensegmente, die Bildbereichen entsprechen, in denen sämtliche Bildinformationen erhalten werden sollen, wesentlich weniger als die übrigen Datensegmente oder gar nicht komprimiert.*

4. Vorrichtung nach einem der Ansprüche 1 bis 3, ***dadurch* gekennzeichnet *daß*** die Verkehrsüberwachungseinrichtung *eine digitale Kamera zur Erzeugung der digitalen Bilddaten aufweist*

5. Verfahren zur Verkehrsüberwachung bei welchen, bei welchem Bilddaten (10) eines mittels einer digitalen Kamera erhalten Fahrzeugbildes in einem komprimierten bzw. dekomprimierten gespeichent bwz. ausgelesen werden mit den Verfahrensschritten:
(a) Speichern der Bilddaten in Speichermitteln,
(b) Auslesen und Komprimieren der so gespeicherten Bilddaten und Wiederspeichern der komprimierten Bilddaten in den Speichermitteln,
(c) Auslesen und Dekomprimieren komprimierter Bilddaten
**gekennzeichnet, *durch*** *die weiteren Verfahrensschritte*
*(d) Unterteilen der* Bilddaten (10) in Datensegmente (36), *die jeweils einem Bildbereich zugeordnet sind*.
*(e) Zuordnen von je einem Label ein Auffinden des Datensegments in der komprimiernten Bilddatei gestatten und die* Ortsinformation (28) der *verschiedenen* Datensegmente (36) *angeben und* zur Lokalisierung *der Datensegmente* abgespeichert werden, und
(f) Dekomprimieren nur einzelner vorgegebener Datensegmente zur Auswertung der diesen zugeordneten Bildbereiche.

6. Verfahren nach Anspruch 5, **dadurch gekennzeichnet, daß** *verschiedene so gebildete* Datensegmente (36) *mit unterschiedlichen Kompressionsgraden* komprimiert werden.

7. *Verfahren nach Anspruch 6,* ***dadurch gekennzeichnet, daß*** *einzelne, durch bestimmte Label gekennzeichnete Datensegmente, die Bildbereichen entsprechen, in denen sämtliche Bildinformationen erhalten werden sollen, wesentlich weniger als die übrigen Datensegmente oder gar nicht komprimiert werden*.

## Claims

1. Traffic monitoring device with a device for data storing of image data and for reading such stored data, comprising memory means (12) for storing image data (10), a compression coder (14) for converting image data (10) to a compressed data format and for storing the thus compressed image data in the memory means, and a decoder (22) for de-compressing stored, compressed image data,
b
(a) the compression coder (14) has means for subdividing the image data (10) read out from the memory means into data segments and for providing these data segments with lables, which permit locating the data segments in the compressed image file, and which can be stored together with the data segments and represent location information of the data segments,
(b) the decoder comprises means for selecting data segments of the image data, which data segments correspond to particular image areas (30,32) of the whole image, and for de-compressing these image areas only and for storing these de-compressed image areas in the memory means (12).

2. Device according to claim 1, **characterised in that** different data segments thus formed can be compressed by the compression coder with different degrees of compression.

3. Device according to claim 2, **characterised in that** the compression coder is designed such that it compresses individual data segments, which are **characterised by** particular lables and correspond to image areas in which all image information is to be retained, substantially less than the remaining data segments or not at all.

4. Device as claimed in any one of the claims 1 to 3, **characterised in that** the traffic monitoring device has a digital camera for generating the digital image data.

5. Method for traffic monitoring, wherein image data (10) are stored and read out in a compressed or de-compressed data format data format,
with the steps of:
(a) storing the image data in memory means,
(b) reading out and compressing the image data thus stored, and re-storing the compressed image data in the memory means,
(c) reading out and de-compressing compressed image data,
**characterised by the further steps of**
(d) subdividing the image data (10) in data segments (36) each of which is associated with an image area,
(e) associating a lable with each data segment, the lables permitting locating the data segments in the compressed image file and providing the location information (28) of the variuos data segments (36) and are stored for localising these data segments, and
(f) de-compressing individual, selected data segments only foe evaluating the image areas associated therewith.

6. Method according to claim 5, **characterised in that** a number of data segments (36) thus formed are compressed with different degrees of compression.

7. Method according to claim 6, **characterised in that** individual data segments which are **characterised by** particular lables and correspond to image areas in which all image information is to be retained, are compressed subatantially less than the remaining data segments or not at all.

## Revendications

1. Installation de contrôle de la circulation munie d'un dispositif destiné à mémoriser des données d'images et à lire les données d'images mémorisées de cette espèce à l'aide de moyens de mémorisation (12) destinés à mémoriser des données d'images (10), d'un codeur de compression (14) destiné à convertir les données d'images (10) en format de données comprimées et destiné à mémoriser les données d'images ainsi comprimées dans les moyens de mémorisation et munie d'un décodeur (22) destiné à décomprimer les données d'images comprimées mémorisées,
**caractérisée en ce que**
(a) le codeur de compression '(14) présente des moyens destinés à subdiviser les données d'images (10) lues par les moyens de mémorisation en segments de données et destinés à pourvoir ces segments de données de labels qui permettent de trouver le segment de données dans le fichier d'images comprimées et qui sont susceptibles d'être mémorisés avec les segments de données et représentent une information sur le lieu des segments de données,
(b) le décodeur comprend des moyens destinés à sélectionner des segments de données des données d'images correspondant à des zones d'images définies (30,32) de l'image toute entière, et destinés à décomprimer seulement ces zones d'images (30,32) et destinés à déposer ces zones d'images décomprimées dans les moyens de mémorisation (12).

2. Dispositif selon la revendication 1, **caractérisé en ce que** différents segments de données ainsi formés sont susceptibles d'être comprimés par le codeur de compression à des degrés de compression différents.

3. Dispositif selon la revendication 2, **caractérisé en ce que** le codeur de compression est réalisé de telle façon qu'il comprime sensiblement moins que les segments de données restants ou ne comprime pas du tout chacun des segments de données **caractérisés par** des labels définis et correspondant à des zones d'images dans lesquelles toutes les informations sur les images seront obtenues.

4. Dispositif selon l'une quelconque des revendications 1 à 3, **caractérisé en ce que** l'installation de contrôle de la circulation présente une caméra numérique destinée à produire les données d'images numériques.

5. Procédé destiné à contrôler la circulation pour lequel les données d'images (10) sont mémorisées et lues respectivement dans un format de données comprimées et décomprimées respectivement, présentant les étapes de procédé de :
(a) mémorisation des données d'images dans des moyens de mémorisation,
(b) lecture et compression des données d'images ainsi mémorisées et mémorisation supplémentaire des données d'images comprimées dans les moyens de mémorisation,
(c) lecture et décompression des données d'images comprimées,
**caractérisé par les étapes de procédé supplémentaires de**
(d) subdivision des données d'images (10) en segments de données (36) dont chacun est associé à une zone d'images,
(e) association de chacun dés labels à chacun des segments de données, les labels permettant de trouver un segment de données dans le fichier d'images comprimées, indiquant l'information sur le lieu (18) des différents segments de données (36) et étant mémorisés afin de localiser les segments de données, et
(f) décompression uniquement de chacun des segments de données prédéfinis afin d'évaluer les zones d'images associées à ceux-ci.

6. Procédé selon la revendication 5, **caractérisé en ce que** différents segments de données ainsi formés (36) sont comprimés à des degrés de compression différents.

7. Procédé selon la revendication 6, **caractérisé en ce que** chacun des segments de données **caractérisés par** des labels définis et correspondant à des zones d'images dans lesquelles toutes les informations sur les images seront obtenues est sensiblement moins comprimé que les segments de donnés restants ou n'est pas comprimé du tout.
